# EUROPÄISCHE PATENTANMELDUNG

(11) **EP 4 431 191 A1**
(43) Veröffentlichungstag der Anmeldung: **18.09.2024**
(21) Anmeldenummer: 24161805.7
(22) Anmeldetag: 06.03.2024
(51) Int. Cl.: B05C 1/08, B05C 11/10, B28B 3/12, B28B 5/02, B29C 43/00, B29C 43/28, H01M 4/04, H01M 4/139, B29C 43/24, B29C 43/58, B29C 43/46

(54) **VERFAHREN ZUM BETRIEB EINER WALZVORRICHTUNG FÜR DIE HERSTELLUNG EINER ELEKTRODENBAHN SOWIE WALZVORRICHTUNG**

(30) Priorität: 14.03.2023 DE 102023202305
(71) Anmelder: VOLKSWAGEN AG, 38440 Wolfsburg (DE)
(72) Erfinder: Schopf, Sven, 38116 Braunschweig (DE); Bußwinkel, Ludger, 38106 Braunschweig (DE); Reuber, Sebastian, 01099 Dresden (DE)

(57) **Zusammenfassung**

Es wird ein Verfahren zum Betrieb einer Walzvorrichtung (2) für die Herstellung einer Elektrodenbahn (4) angegeben, wobei die Walzvorrichtung (2) zur Ausbildung eines Materialfilms (14) für die Elektrodenbahn (4) in Walzwerk (16, 18) aufweist, mit einem Walzenpaar (20) und mit einer Auftragswalze (22), welche separat zu dem Walzenpaar (20) ausgebildet ist oder ein Teil des Walzenpaars (20) ist, wobei der Auftragswalze (22) ein Substrat (12) für die Elektrodenbahn (4) zugeführt wird, wobei das Walzwerk (16, 18) einen Filmbildungsspalt (24) aufweist, welcher von dem Walzenpaar (20) gebildet ist, welcher eine Menge an Material (26) ausgibt und welcher daraus den Materialfilm (14) erzeugt, wobei der Materialfilm (14) auf die Auftragswalze (22) aufgetragen wird und von der Auftragswalze (22) aus auf das Substrat (12) übertragen wird, wobei der Materialfilm (14) ein Flächengewicht (G) und eine Filmdicke (D) aufweist, wobei das Flächengewicht (G) und/oder die Filmdicke (D) auf einen Sollwert geregelt werden und hierzu die Walzvorrichtung (2) abhängig von dem Flächengewicht (G) und/oder der Filmdicke (D) gesteuert wird. Weiter wird eine entsprechende Walzvorrichtung (2) angegeben.

## Beschreibung

Die Erfindung betrifft ein Verfahren zum Betrieb einer Walzvorrichtung für die Herstellung einer Elektrodenbahn sowie eine entsprechende Walzvorrichtung. Insbesondere betrifft die Erfindung somit auch die Herstellung einer Elektrodenbahn sowie eine entsprechende Elektrodenbahn.

Eine Elektrodenbahn wird regelmäßig zur Herstellung einer Batterie verwendet. Die Batterie dient dann beispielsweise zur Energieversorgung eines elektrischen Antriebs eines Fahrzeugs, z.B. eines PKW oder LKW. Die Elektrodenbahn wird typischerweise als eine Endlosbahn hergestellt, welche dann zu einzelnen Elektroden konfektioniert wird. Eine oder mehrere Elektroden werden dann gestapelt oder gerollt und zu einer Zelle zusammengesetzt. Eine oder mehrere solcher Zellen werden dann geeignet miteinander verschaltet und in einem gemeinsamen Gehäuse untergebracht, um eine Batterie zu bilden.

Bei der Herstellung einer Elektrodenbahn wird zunächst ein Substrat bereitgestellt, üblicherweise eine Folie aus einem leitenden Material wie Kupfer oder Aluminium. Auf das Substrat wird dann ein Materialfilm aufgetragen, welcher u.a. aus einem Aktivmaterial besteht und beispielsweise Lithium oder eine Lithiumverbindung enthält, zur Herstellung einer Lithium-Batterie. Die Herstellung der Elektrode kann je nach Konfiguration des Aktivmaterials für den Materialfilm prinzipiell trocken oder nass erfolgen.

In der WO 2018/210723 A1 ist ein Verfahren zum Herstellen eines Trockenfilms beschrieben. Dabei wird eine Trockenpulvermischung durch eine Walzvorrichtung, die eine erste Walze und eine zweite Walze aufweist, zu dem Trockenfilm verarbeitet. Die erste Walze weist eine höhere Drehumfangsgeschwindigkeit als die zweite Walze auf und der entstandene Trockenfilm wird auf der ersten Walze gelagert.

In der US 2022/0006071 A1 wird beschrieben, dass bei der trockenen Elektrodenherstellung die Dicke des freistehenden Films und das Maß an Verdichtung dieses Films durch wiederholtes Kalandrieren gesteuert werden. Im Gegensatz zur nassen Elektrodenherstellung ist dadurch das Ausmaß an Kontrolle über das Flächengewicht und die Filmdicke begrenzt.

Zusätzlich wird noch verwiesen auf US 2020/0144591 A1.

Vor diesem Hintergrund ist es eine Aufgabe der Erfindung, die Herstellung einer Elektrodenbahn zu verbessern, insbesondere die trockene Herstellung. Hierzu sollen ein verbessertes Verfahren zum Betrieb einer Walzvorrichtung sowie eine entsprechende Walzvorrichtung angegeben werden.

Die Aufgabe wird erfindungsgemäß gelöst durch ein Verfahren mit den Merkmalen gemäß Anspruch 1 sowie durch eine Walzvorrichtung mit den Merkmalen gemäß Anspruch 10. Vorteilhafte Ausgestaltungen, Weiterbildungen und Varianten sind Gegenstand der abhängigen Ansprüche. Die Ausführungen im Zusammenhang mit dem Verfahren gelten sinngemäß auch für die Walzvorrichtung und umgekehrt. Sofern nachfolgend implizit oder explizit Schritte des Verfahrens angegeben sind, ergeben sich vorteilhafte Ausgestaltungen für die Walzvorrichtung insbesondere dadurch, dass diese zumindest eine Steuereinheit aufweist, welche ausgebildet ist, einen oder mehrere dieser Schritte auszuführen.

Das Verfahren dient zum Betrieb einer Walzvorrichtung. Eine bevorzugte Walzvorrichtung ist in der eingangs genannten WO 2018/210723 A1 beschrieben, von solch einer Walzvorrichtung wird nachfolgend auch ohne Beschränkung der Allgemeinheit ausgegangen. Die Walzvorrichtung wird auch als Kalander bezeichnet. Die Walzvorrichtung wird verwendet für die Herstellung einer Elektrodenbahn. Die Elektrodenbahn dient insbesondere zur Herstellung einer Batterie, welche dann vorzugsweise zur Energieversorgung eines elektrischen Antriebs eines Fahrzeugs, z.B. eines PKW oder LKW, verwendet wird. Die Elektrodenbahn wird zunächst mit der Walzvorrichtung insbesondere als eine Endlosbahn hergestellt und anschließend gegebenenfalls je nach Bedarf konfektioniert.

Bei der Herstellung der Elektrodenbahn werden ein Substrat und zumindest ein Materialfilm zusammengesetzt. Die Kombination aus Substrat und Materialfilm bildet dann die Elektrodenbahn. Die Walzvorrichtung weist zur Ausbildung des Materialfilms für die Elektrodenbahn ein Walzwerk auf, mit einem Walzenpaar und mit einer Auftragswalze. Die Auftragswalze ist entweder separat zu dem Walzenpaar ausgebildet oder ist ein Teil des Walzenpaars, d.h. eine von zwei Walzen des Walzenpaars. In jedem Fall weist das Walzwerk wenigstens zwei Walzen zur Erzeugung des Materialfilms auf, die Walzvorrichtung wird entsprechend auch als Mehrwalzenanlage oder Mehrwalzenkalander bezeichnet. Gegebenenfalls weist die Walzvorrichtung mehrere Walzwerke auf, um das Substrat beidseitig mit je einem Materialfilm zu beschichten.

Das Walzwerk weist einen Filmbildungsspalt auf, welcher von dem Walzenpaar gebildet ist, d.h. der Filmbildungsspalt ist zwischen den beiden Walzen des Walzenpaars ausgebildet und weist somit eine Spaltbreite auf, welche dem Abstand der beiden Walzen voneinander entspricht. Der Filmbildungsspalt gibt eine Menge (d.h. Menge pro Zeiteinheit) an Material aus und erzeugt daraus den Materialfilm. Der Materialfilm wird also mit dem Filmbildungsspalt urgeformt. Dabei beeinflusst die Spaltbreite des Filmbildungsspalts maßgeblich die Erzeugung des Materialfilms. Das Material hierfür wird insbesondere mittels einer Dosiereinrichtung der Walzvorrichtung zugeführt, nämlich in einen Zwickel, welcher zwischen den beiden Walzen des Walzenpaars ausgebildet ist und welcher in den Filmbildungsspalt mündet. Zusätzlich zur Spaltbreite bestimmt insbesondere auch eine Relativgeschwindigkeit der beiden Walzen zueinander (analog eine entsprechende Scherrate) die Erzeugung des Materialfilms.

Das Material liegt insbesondere in Form eines Pulvers vor. Das Material ist insbesondere eine Batteriepulvermischung. Das Material enthält zumindest insbesondere ein Aktivmaterial. Das Aktivmaterial enthält beispielsweise Lithium oder eine Lithiumverbindung. Weiterhin enthält das Material vorzugsweise ein Bindemittel (Binder) und/oder ein Leitadditiv. Das Material ist bevorzugterweise frei von flüssigen Inhaltsstoffen oder enthält höchstens 3 Gew.% an flüssigen Inhaltsstoffen, besonders bevorzugt höchstens 1 Gew.%. Ein solches Material wird auch als "trockenes Material" bezeichnet und ein Verfahren, bei welchem ein solches Material verwendet wird, wird als "trockenes Verfahren zur Herstellung einer Elektrodenbahn" oder äquivalent als "trockene Elektrodenherstellung" bezeichnet. Flüssige Inhaltsstoffe sind insbesondere Löse- und/oder Schmiermittel, sodass das Material dann bevorzugterweise löse- und/oder schmiermittelfrei ist oder Löse- und/oder Schmiermittel wie beschrieben in höchstens geringer Menge im Material enthalten sind.

Die beiden Walzen des Walzenpaars werden zum Erzeugen des Materialfilms insbesondere mit unterschiedlichen Umfangsgeschwindigkeiten betrieben. Dadurch entsteht am Filmbildungsspalt eine Scherkraft, welche auf das Material wirkt und entsprechend die Erzeugung des Materialfilms beeinflusst. Die Scherkraft ist dabei abhängig von einer Differenz der beiden Umfangsgeschwindigkeiten, d.h. einer Relativgeschwindigkeit der einen Walze des Walzenpaars zur anderen Walze des Walzenpaars. Diejenige der beiden Walzen, welche die geringere Umfangsgeschwindigkeit aufweist, wird auch als Scherwalze bezeichnet. Die andere der beiden Walzen ist dann entweder die Auftragswalze oder wird als Transferwalze bezeichnet. Der Materialfilm wird insbesondere auf derjenigen Walze erzeugt, welche die größere Umfangsgeschwindigkeit aufweist, d.h. je nach Ausgestaltung auf der Auftragswalze oder der Transferwalze.

Im Rahmen des Verfahrens wird der Materialfilm auf die Auftragswalze aufgetragen. Falls die Auftragswalze ein Teil des Walzenpaars ist, wird der Materialfilm ausgehend von dem Filmbildungsspalt vorzugsweise unmittelbar auf die Auftragswalze aufgetragen. Falls die Auftragswalze dagegen separat zu dem Walzenpaar ausgebildet ist, wird der Materialfilm ausgehend von dem Filmbildungsspalt vorzugsweise unmittelbar auf die Transferwalze aufgetragen. Über die Transferwalze wird der Materialfilm dann vom Filmbildungsspalt zur Auftragswalze übertragen. Dabei übergibt die Transferwalze den Materialfilm entweder mittelbar oder unmittelbar an die Auftragswalze.

Das Substrat ist insbesondere eine Folie aus einem leitenden Material, z.B. Kupfer oder Aluminium. Das Substrat für die Elektrodenbahn wird nun der Auftragswalze zugeführt und der Materialfilm wird von der Auftragswalze aus auf das Substrat übertragen, d.h. das Substrat wird mit dem Materialfilm beschichtet. Zweckmäßigerweise ist das Substrat mit einem Haftvermittler oder ähnlichem beschichtet, um den Materialfilm sicher auf dem Substrat zu fixieren. Das Übertragen des Materialfilms auf das Substrat wird auch als "Laminieren" bezeichnet.

Der Materialfilm ist insbesondere nicht freitragend, sondern ist vom Filmbildungsspalt bis zum Substrat durchgängig von einer oder mehreren Walzen getragen. Daher wird der Materialfilm auch als "walzengetragener Materialfilm" bezeichnet.

Zum Übertragen des Materialfilms auf das Substrat weist die Walzvorrichtung geeigneterweise eine Gegenwalze zur Auftragswalze auf. Die Gegenwalze ist entweder eine separate Walze oder eine Auftragswalze eines zweiten Walzwerks, analog zum bereits beschriebenen (dann ersten) Walzwerk. Zwischen der Gegenwalze und der Auftragswalze ist dann ein Spalt ausgebildet, durch welchen hindurch das Substrat gefördert wird und in welchem der Materialfilm auf das Substrat übertragen wird. Beim Übertragen auf das Substrat wird der Materialfilm bevorzugterweise nicht verdichtet oder lediglich geringfügig verdichtet, d.h. um höchstens 5% verdichtet. In diesem Fall wird der Spalt auch als "Laminierspalt" bezeichnet. Von diesem Fall wird nachfolgend auch ohne Beschränkung der Allgemeinheit ausgegangen.

Sofern keine Transferwalze vorhanden ist, wird der Materialfilm im Laminierspalt vorzugsweise auf einer Zieldichte verdichtet, sodass eine weitere Kalandrierung nicht erforderlich ist und auch nicht erfolgt. Falls jedoch eine Verdichtung auf die Zieldichte im Laminierspalt nicht möglich ist, z.B. bei Verwendung einer Transferwalze, dann wird der Materialfilm zweckmäßigerweise stromab des Laminierspalts mittels eines Kalanders nachverdichtet, insbesondere auf die Zieldichte.

Ganz allgemein weist der Materialfilm ein Flächengewicht und eine Filmdicke auf. Die Filmdicke ist insbesondere senkrecht zu einer Breite und einer Länge des Materialfilms gemessen (und somit auch senkrecht zur Oberfläche der Walzen sowie senkrecht zum Substrat) und dessen geringste Ausdehnung. Die Filmdicke liegt typischerweise im Bereich von 30 µm bis 200 µm, vorzugsweise im Bereich von 40 µm bis 150 µm. Das Flächengewicht gibt an, welche Masse der Materialfilm pro Flächeneinheit aufweist, wobei sich die Flächeneinheit in Richtung der Länge und der Breite des Materialfilms erstreckt. Das Flächengewicht liegt typischerweise im Bereich von 50 g/m² bis 300 g/m². Das Flächengewicht wird auch als Beladung oder Flächenbeladung bezeichnet. Bei einem konstanten Flächengewicht des Materialfilms ist die Filmdicke äquivalent zu einer Filmdichte des Materialfilms, d.h. der Masse an Materialfilm pro Volumeneinheit.

Im Gegensatz zur Filmdicke ist das Flächengewicht nach dem Übertragen des Materialfilms auf das Substrat nicht mehr einstellbar, da dann kein Material mehr hinzugefügt oder entfernt wird. Lediglich die Filmdicke ist durch zusätzliches Kalandrieren noch einstellbar, jedoch nur zu geringeren Werten hin. Beim Kalandrieren bleibt das Flächengewicht jedoch erhalten. Das Flächengewicht und auch die Filmdicke sind jedoch vor dem Übertragen des Materialfilms auf das Substrat durch eine entsprechende Steuerung der Walzvorrichtung einstellbar. Vorliegend werden nun das Flächengewicht und/oder die Filmdicke auf einen Sollwert (insbesondere ein Sollwert aus den oben genannten Bereichen) geregelt und hierzu wird die Walzvorrichtung abhängig von dem Flächengewicht und/oder der Filmdicke gesteuert. Darunter wird verstanden, dass entweder das Flächengewicht oder die Filmdicke auf einen Sollwert geregelt wird oder dass beides zugleich erfolgt, d.h. dass das Flächengewicht und die Filmdicke auf einen jeweiligen Sollwert geregelt werden. Für das Flächengewicht wir der Sollwert auch als Zielbeladung bezeichnet, für die Filmdicke entsprechend als Zieldicke. Ein wesentlicher Vorteil der Erfindung ist entsprechend, dass die Herstellung der Elektrodenbahn besonders genau ist und Vorgaben hinsichtlich des Flächengewichts und/oder der Filmdicke besonders einfach und präzise realisiert werden. Besonders bevorzugt ist eine Ausgestaltung, bei welcher wenigstens das Flächengewicht geregelt wird, da dieses wie beschrieben nach dem Übertragen des Materialfilms auf das Substrat nicht mehr veränderbar ist.

Bei der trockenen Elektrodenherstellung ist es grundsätzlich möglich, ein vorgegebenes Flächengewicht ("Zielbeladung") und eine vorgegebene Filmdicke ("Zieldicke") dadurch zu erzielen, dass die Walzvorrichtung mit verschiedenen Betriebsparametern betrieben wird, sodass eine Elektrodenbahn hergestellt wird, entlang welcher Flächengewicht und Filmdicke variieren. Es werden dann lediglich diejenigen Bereiche der Elektrodenbahn weiterverarbeitet, welche das vorgegebene Flächengewicht und die vorgegebene Filmdicke aufweisen, alle übrigen Bereiche werden verworfen. Dies erzeugt jedoch zwangsläufig Ausschuss und ist entsprechend ineffizient und kostenintensiv. Durch die vorliegende Erfindung wird eine automatische Einstellung und Anpassung (nämlich eine Regelung) der Walzvorrichtung realisiert, wodurch sichergestellt wird, dass kontinuierlich oder zumindest weit überwiegend das vorgegebene Flächengewicht und/oder die vorgegebene Filmdicke erzeugt werden. Dadurch entsteht bei der Herstellung der Elektrodenbahn entsprechend weniger Ausschuss.

Dabei wird bei der vorliegenden Erfindung die Elektrodenbahn gerade nicht erst nachträglich, d.h. nach dem Übertragen des Materialfilms auf das Substrat, bearbeitet, um Flächengewicht und Filmdicke einzustellen, sondern der Materialfilm wird vor dem Übertragen auf das Substrat entsprechend passend erzeugt. Dies macht speziell eine Einstellung des Flächengewichts überhaupt erst möglich. Bezüglich der Einstellung der Filmdicke ergibt sich dann zumindest der Vorteil, dass eine nachträgliche Kalandrierung der Elektrodenbahn entfällt und die Walzvorrichtung entsprechend vereinfacht ist.

Um das Flächengewicht und/oder die Filmdicke auf einen jeweiligen Sollwert zu regeln, weist die Walzvorrichtung insbesondere eine Steuereinheit sowie wenigstens eine Messeinheit und wenigstens einen Regler auf, welche mit der Steuereinheit verbunden sind oder ein Teil derselben sind. Mit der Messeinheit wird eine Regelgröße gemessen und daraus ein Istwert bestimmt, dieser wird dann an den Regler weitergeleitet. Dem Regler wird außerdem der Sollwert zugeführt. Abhängig von einer Abweichung des Istwerts zum Sollwert (Regelabweichung) steuert dann der Regler die Walzvorrichtung, d.h. eine entsprechende Stellgröße. Nachfolgend werden verschiedene geeignete Ausgestaltungen hierfür beschrieben. Diese Ausgestaltungen unterschieden sich insbesondere in der Wahl der Regelgröße und deren Messung sowie in der Stellgröße, d.h. darin, wie die Walzvorrichtung konkret gesteuert wird. Dabei sind die verschiedenen Ausgestaltungen oder lediglich einzelne Aspekte davon grundsätzlich miteinander kombinierbar.

Als Stellgröße sind besonders die oben bereits genannte Spaltbreite des Filmbildungsspalts und die Relativgeschwindigkeit der Walzen des Walzenpaars geeignet. Entsprechend wird in einer geeigneten Ausgestaltung die Walzvorrichtung gesteuert, indem die Spaltbreite des Filmbildungsspalts eingestellt wird. Alternativ oder zusätzlich weist das Walzenpaar wie oben beschrieben zwei Walzen auf, welche zum Erzeugen des Materialfilms mit unterschiedlichen Umfangsgeschwindigkeiten betrieben werden, und die Walzvorrichtung wird dann gesteuert, indem eine Differenz der Umfangsgeschwindigkeiten eingestellt wird. Durch beide Maßnahmen wird jeweils direkt die Menge an Material eingestellt, welche (pro Zeiteinheit) aus dem Filmbildungsspalt ausgegeben wird, und somit auch Flächengewicht und Filmdicke des Materialfilms. Bei entsprechender Steuerung sowohl der Spaltbreite als auch der Relativgeschwindigkeit lassen sich vorteilhaft auch Flächengewicht und Filmdicke unabhängig voneinander einstellen. Durch eine Steuerung der Spaltbreite des Filmbildungsspalt wird zweckmäßigerweise das Flächengewicht eingestellt und durch eine Steuerung der Spaltbreite des Laminierspalts oder der Spaltbreite zwischen Transferwalze und Auftragswalze wird die Filmdicke eingestellt und damit die Dichte des Materialfilms. Falls eine Messung des Flächengewichts auf einer der Walzen nicht möglich ist, wird die Filmdicke geeigneterweise zum Abgleich der beiden Seiten der Elektrodenbahn verwendet sowie insbesondere zur Prozessüberwachung. Vorteilhafterweise wird aber trotzdem das Flächengewicht, insbesondere aus der Messung auf dem Substrat, als Zielgröße eingestellt, d.h. insbesondere auf einen Sollwert geregelt.

Vorzugsweise werden das Flächengewicht oder die Filmdicke oder beide gemessen und direkt als Istwert verwendet. Als Sollwert wird dann eine entsprechende Zielbeladung oder Zieldicke verwendet. Möglich und geeignet ist aber auch eine Ausgestaltung, bei welcher der Istwert (und analog der Sollwert) aus dem Flächengewicht oder der Filmdicke oder aus beiden gemeinsam lediglich abgeleitet ist und gegebenenfalls entsprechend abstrahiert ist, z.B. nicht in Einheiten des Flächengewichts oder der Filmdicke angegeben ist. In einer zweckmäßigen Ausgestaltung wird das Flächengewicht aus einer Messung der Filmdicke abgeleitet. Hierzu wird die Filmdicke insbesondere auf der Auftragswalze (oder analog auf der Transferwalze) gemessen und dann in Kombination mit der Umfangsgeschwindigkeit (äquivalent: Drehgeschwindigkeit und Walzendurchmesser) der Auftragswalze und der Menge an Material, welches vom Filmbildungsspalt ausgegeben wird, ein Istwert für das Flächengewicht errechnet und damit dann eine Regelung des Flächengewichts basierend auf einer Messung der Filmdicke durchgeführt. Alternativ oder zusätzlich wird das Flächengewicht stromab des Laminierspalts gemessen und die Filmdicke wird vorzugsweise verwendet, um eine Gleichmäßigkeit der beiden Seiten der Elektrodenbahn zu kontrollieren, d.h. insbesondere ob die Filmdicke auf beiden Seiten gleich ist.

Eine Messung des Flächengewichts und der Filmdicke ist an unterschiedlichen Stellen der Walzvorrichtung möglich und vorteilhaft. In einer geeigneten Ausgestaltung wird das Flächengewicht und/oder die Filmdicke am Materialfilm gemessen, während der Materialfilm auf der Auftragswalze aufgetragen ist, d.h. es wird an der Auftragswalze gemessen. Alternativ oder zusätzlich wird das Flächengewicht und/oder die Filmdicke am Materialfilm gemessen, während der Materialfilm auf dem Substrat aufgetragen ist, d.h. es wird stromab der Auftragswalze und am Substrat gemessen. Die Messung des Flächengewichts erfolgt beispielsweise mittels einer Absorptionsmessung, bei welcher die Absorption von z.B. Röntgenstrahlung oder Ultraschall im Materialfilm z.B. in Transmission gemessen wird. Dies ist besonders einfach am Materialfilm auf dem Substrat möglich, da dieses stromab der Auftragswalze regelmäßig freistehend ist. Grundsätzlich ist eine Messung des Flächengewichts aber auch am walzengetragenen Materialfilm vor dem Übertragen auf das Substrat denkbar. Die Filmdicke wird beispielsweise optisch in Reflexion und im Vergleich zu einer Referenz gemessen. Besonders bevorzugt ist eine Kombination, bei welcher die Filmdicke gemessen wird, während der Materialfilm auf der Auftragswalze aufgetragen ist, und das Flächengewicht, während der Materialfilm auf dem Substrat aufgetragen ist. Diese beiden Messungen sind besonders einfach. In einer Ausgestaltung, bei welcher beidseitig auf das Substrat je ein Materialfilm aufgetragen wird, liefert die Messung des Flächengewichts nur einen Wert (Istwert) für beide Materialfilme zusammen. Mit der zusätzlichen Messung der Filmdicke der einzelnen Materialfilme vor dem Übertragen auf das Substrat wird dann dieser Wert entsprechend dem Verhältnis der beiden Filmdicken auf die beiden Materialfilme aufgeteilt und somit für jeden der Materialfilme das jeweilige Flächengewicht zumindest näherungsweise korrekt bestimmt.

Analog zur Spaltbreite des Filmbildungsspalts und der Relativgeschwindigkeit der Walzen des Walzenpaars ist bei einer Walzvorrichtung mit einer Transferwalze auch alternativ oder zusätzlich einerseits die Verwendung der Spaltbreite des Spalts zwischen Transferwalze und Auftragswalze als Stellgröße und/oder andererseits die Verwendung der Relativgeschwindigkeit zwischen Transferwalze und Auftragswalze als Stellgröße vorteilhaft. Wie bereits beschrieben, weist die Walzvorrichtung in einer zweckmäßigen Ausgestaltung eine Transferwalze auf, welche stromauf der Auftragswalze angeordnet ist und über welche der Materialfilm vom Filmbildungsspalt zur Auftragswalze übertragen wird. Der Begriff "stromauf" (analog "stromab") wird dabei bezüglich einer Förderrichtung des Materialfilms verstanden. Die Walzvorrichtung wird dann gesteuert, indem eine Spaltbreite des Spalts zwischen der Transferwalze und der Auftragswalze eingestellt wird und/oder indem die Differenz der Umfangsgeschwindigkeiten (d.h. Relativgeschwindigkeit) der Transferwalze und der Auftragswalze eingestellt wird.

Ebenso wird analog zur Messung des Flächengewichts und/oder der Filmdicke auf der Auftragswalze und alternativ oder zusätzlich hierzu in einer geeigneten Ausgestaltung das Flächengewicht und/oder die Filmdicke am Materialfilm gemessen, während der Materialfilm auf der Transferwalze aufgetragen ist, d.h. es wird an der Transferwalze gemessen.

Für die Walzvorrichtung kommen unterschiedliche Konfigurationen in Betracht, welche allesamt für das hier beschriebene Verfahren geeignet sind. Die optionale Verwendung einer Transferwalze wurde bereits beschrieben. Weiterhin ist auch eine einseitige oder beidseitige Beschichtung des Substrats möglich, wobei letzteres bevorzugt wird. Entsprechend wird in einer geeigneten Ausgestaltung mit der Walzvorrichtung das Substrat beidseitig beschichtet, d.h. auf beiden Seiten des Substrats wird je ein Materialfilm wie beschrieben aufgetragen. Der bereits beschriebene (erste) Materialfilm wird dann auf eine erste Seite des Substrats aufgetragen und die Walzvorrichtung weist ein weiteres (zweites) Walzwerk auf, mit welchem ein weiterer (zweiter) Materialfilm erzeugt wird, welcher auf eine gegenüberliegende, zweite Seite des Substrats aufgetragen wird. Auch der zweite Materialfilm weist ein Flächengewicht und eine Filmdicke auf. Die Erzeugung der beiden Materialfilme und deren Übertragung auf das Substrat verläuft vorzugsweise gleichartig, d.h. die Walzvorrichtung weist für jeden der Materialfilme ein Walzwerk auf. Die beschriebenen Messungen und Regelungen werden zweckmäßigerweise entsprechend den obigen und nachfolgenden Ausführungen für beide Walzwerke und Materialfilme gleichermaßen durchgeführt. Die Walzwerke sind bezüglich einer Förderrichtung des Substrats entweder versetzt angeordnet, sodass die beiden Materialfilme nacheinander auf das Substrat übertragen werden, oder an derselben Position, sodass die beiden Materialfilme gleichzeitig auf das Substrat übertragen werden. In letzterem Fall sind die beiden Auftragswalzen dann zugleich jeweils auch eine Gegenwalze für die jeweils andere Auftragswalze. Der Fall, bei welchem die beiden Materialfilme nacheinander aufgetragen werden, ist insofern vorteilhaft, als dass dann eine Messung des Flächengewichts und/oder der Filmdicke an einem einzelnen Materialfilm möglich ist, während dieser schon auf dem Substrat aufgetragen ist. In einer vorteilhaften Ausgestaltung wird entsprechend das Flächengewicht und/oder die Filmdicke am Materialfilm gemessen, während dieser auf dem Substrat aufgetragen ist, jedoch noch bevor der zweite Materialfilm auf der gegenüberliegenden Seite des Substrats aufgetragen wird. Das Flächengewicht und/oder die Filmdicke wird entsprechend stromab der Auftragswalze des ersten Walzwerks und stromauf der Auftragswalze des zweiten Walzwerks gemessen.

Im Falle eines beidseitig beschichteten Substrats werden die beiden Walzwerke bevorzugterweise derart gesteuert, dass eine Differenz der beiden Filmdicken minimiert wird, d.h. die Materialfilme werden automatisch gleich dick ausgebildet. Dies ist besonders vorteilhaft in Kombination mit einer Messung des Flächengewichts am beidseitig beschichteten Substrat, wie oben bereits beschrieben wurde.

Optional wird in einer zweckmäßigen Ausgestaltung ein Füllstand des Materials vor dem Filmbildungsspalt abhängig von einem Füllstands-Istwert oder abhängig von dem Flächengewicht und/oder der Filmdicke auf einen Füllstands-Sollwert geregelt, d.h. es erfolgt eine Füllstandsregelung. Damit wird sichergestellt, dass der Zwickel des Walzenpaars weder leerläuft noch überläuft. Die Füllstandsregelung erfolgt entweder dezentral und somit unabhängig von der Regelung des Flächengewichts und/oder der Filmdicke, speziell indem einfach der Füllstand-Istwert gemessen wird und dann abhängig davon die Zufuhr von Material in den Zwickel gesteuert wird. Alternativ erfolgt die Füllstandsregelung zentral, speziell indem die Zufuhr abhängig von dem Flächengewicht und/oder der Filmdicke gesteuert wird.

Vorteilhaft ist auch eine Ausgestaltung, bei welcher zusätzlich auch der Laminierspalt gesteuert wird, insbesondere abhängig von dem Flächengewicht und/oder der Filmdicke. Geeigneterweise wird die Spaltbreite des Laminierspalts abhängig von der Filmdicke, insbesondere der Filmdicke des Materialfilms auf dem Substrat, geregelt.

Eine erfindungsgemäße Walzvorrichtung weist eine Steuereinheit auf, welche ausgebildet und insbesondere auch eingerichtet ist zur Durchführung eines Verfahrens wie vorstehend beschrieben. Die Steuereinheit übernimmt dabei insbesondere eine oder mehrere der oben beschriebenen Steuerungs- und Regelungsaufgaben. Entweder sind sämtliche Steuerungs- und Regelungsaufgaben zentral in einer einzelnen Steuereinheit realisiert oder dezentral auf mehrere entsprechende Steuereinheiten aufgeteilt, z.B. sind eine jeweilige Regelung für die Filmdicke und das Flächengewicht unabhängig voneinander mit voneinander getrennten Steuereinheiten realisiert.

Nachfolgend werden Ausführungsbeispiele der Erfindung anhand einer Zeichnung näher erläutert. Darin zeigen jeweils schematisch:
- Fig. 1: ein Fahrzeug,
- Fig. 2: eine Walzvorrichtung,
- Fig. 3: eine Variante der Walzvorrichtung,
- Fig. 4: eine weitere Variante der Walzvorrichtung,
- Fig. 5: eine weitere Variante der Walzvorrichtung,
- Fig. 6: eine Füllstandsregelung für eine Walzvorrichtung.

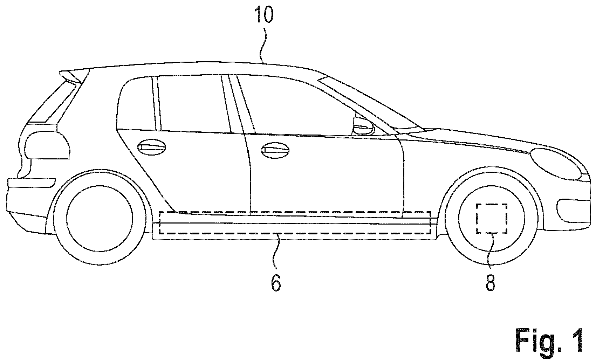

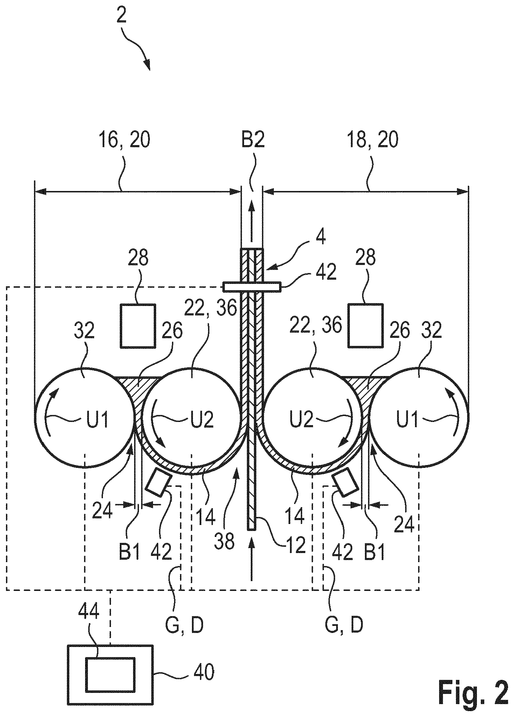

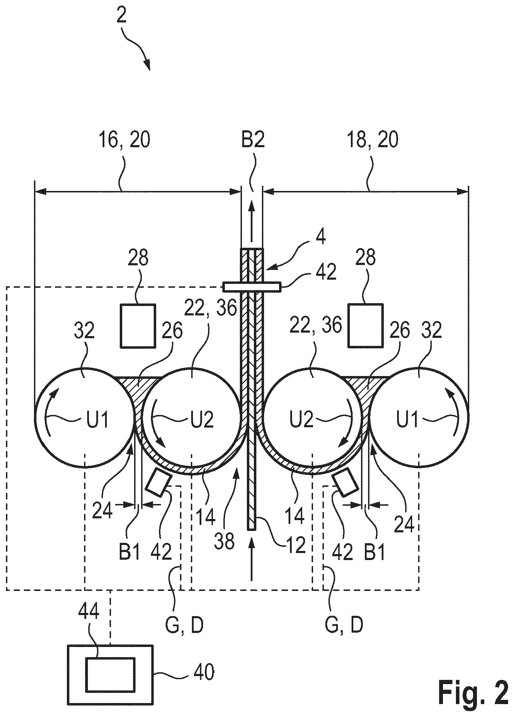

Das erfindungsgemäße Verfahren dient zum Betrieb einer Walzvorrichtung 2. In den Fig. 2 bis 5 ist je ein Ausführungsbeispiel für die Walzvorrichtung 2 gezeigt, anhand dieser Ausführungsbeispiele wird nachfolgend auch das Verfahren erläutert. Die Walzvorrichtung 2 wird verwendet für die Herstellung einer Elektrodenbahn 4. Die Elektrodenbahn 4 dient beispielsweise zur Herstellung einer Batterie 6, welche dann zur Energieversorgung eines elektrischen Antriebs 8 eines Fahrzeugs 10, z.B. eines PKW wie in Fig. 1 gezeigt, verwendet wird. Die Elektrodenbahn 4 wird vorliegend zunächst mit der Walzvorrichtung 2 als eine Endlosbahn hergestellt und anschließend gegebenenfalls je nach Bedarf konfektioniert (nicht gezeigt).

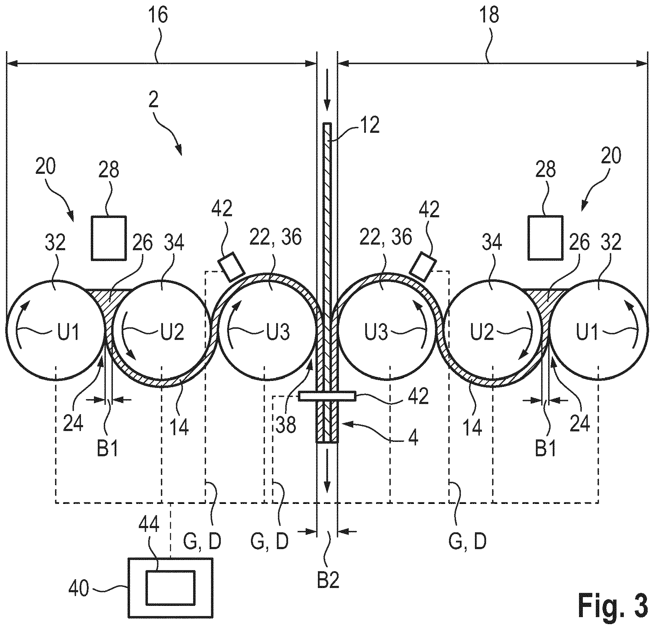

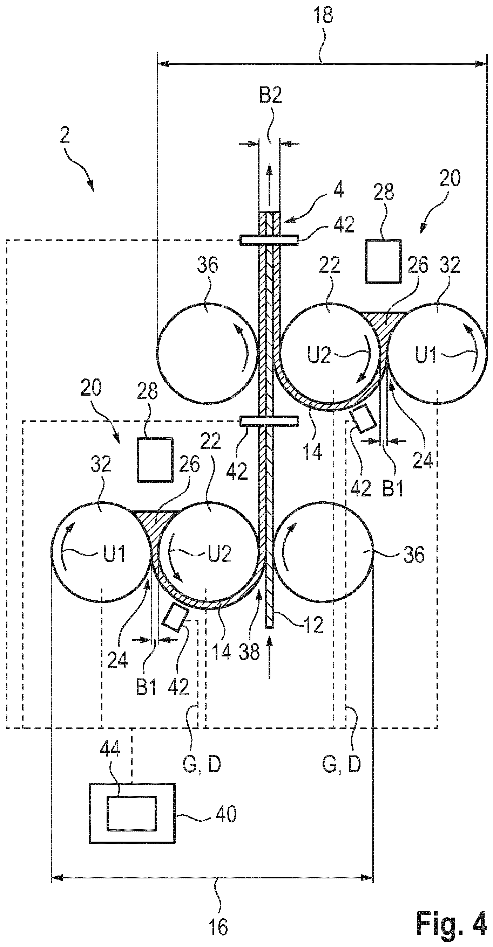

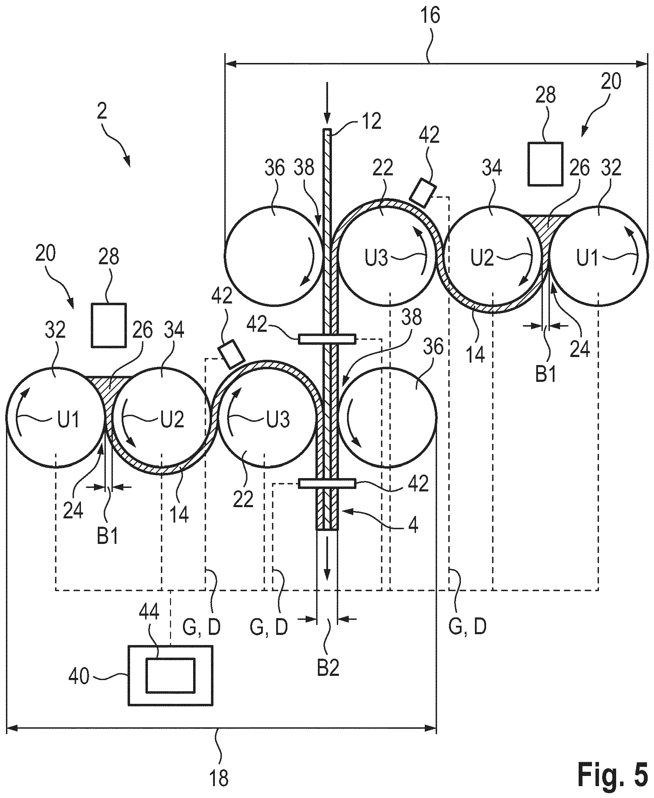

Bei der Herstellung der Elektrodenbahn 4 werden ein Substrat 12 und zumindest ein Materialfilm 14 zusammengesetzt. Die Walzvorrichtung 2 weist zur Ausbildung des Materialfilms 14 ein Walzwerk 16, 18 auf, mit einem Walzenpaar 20 und mit einer Auftragswalze 22. Die Auftragswalze 22 ist entweder separat zu dem Walzenpaar 20 ausgebildet (vgl. Fig. 3 und 5) oder ist ein Teil des Walzenpaars 20 (vgl. Fig. 2 und 4). Die hier in den Fig. 2 bis 5 gezeigten Walzvorrichtungen 2 weisen jeweils mehrere Walzwerke 16, 18 auf, um das Substrat 12 beidseitig mit je einem Materialfilm 14 zu beschichten. Grundsätzlich sind aber auch Ausgestaltungen mit nur einem Walzwerk 16, 18 möglich.

Das Walzwerk 16, 18 weist einen Filmbildungsspalt 24 auf, welcher von dem Walzenpaar 20 gebildet ist, d.h. der Filmbildungsspalt 24 ist zwischen den beiden Walzen des Walzenpaars 20 ausgebildet und weist somit eine Spaltbreite B1 auf, welche dem Abstand der beiden Walzen voneinander entspricht. Der Filmbildungsspalt 24 gibt eine Menge (d.h. Menge pro Zeiteinheit) an Material 26 aus und erzeugt daraus den Materialfilm 14. Dabei beeinflusst die Spaltbreite B1 maßgeblich die Erzeugung des Materialfilms 14. Das Material 26 hierfür wird vorliegend mittels einer Dosiereinrichtung 28 zugeführt, nämlich in einen Zwickel 30, welcher zwischen den beiden Walzen des Walzenpaars 20 ausgebildet ist und welcher in den Filmbildungsspalt 24 mündet.

Das Material 26 liegt vorliegend in Form eines Pulvers vor und ist frei von flüssigen Inhaltsstoffen oder enthält höchstens eine geringe Menge an flüssigen Inhaltsstoffen. Ein solches Material wird auch als "trockenes Material" bezeichnet und ist lösemittelfrei ist.

Die beiden Walzen des Walzenpaars 20 werden zum Erzeugen des Materialfilms 14 mit unterschiedlichen Umfangsgeschwindigkeiten U1, U2 betrieben. Dadurch entsteht am Filmbildungsspalt 24 eine Scherkraft, welche auf das Material 26 wirkt und entsprechend die Erzeugung des Materialfilms 14 beeinflusst. Die Scherkraft ist dabei abhängig von einer Differenz der beiden Umfangsgeschwindigkeiten U1, U2, d.h. einer Relativgeschwindigkeit der beiden Walzen des Walzenpaars 20 zueinander. Diejenige der beiden Walzen, welche die geringere Umfangsgeschwindigkeit U1 aufweist, wird auch als Scherwalze 32 bezeichnet. Die andere der beiden Walzen ist dann entweder die Auftragswalze 22 oder wird als Transferwalze 34 bezeichnet. Der Materialfilm 14 wird auf derjenigen Walze erzeugt, welche die größere Umfangsgeschwindigkeit U2 aufweist, d.h. auf der Auftragswalze 22 oder der Transferwalze 34.

Im Rahmen des Verfahrens wird der Materialfilm 14 auf die Auftragswalze 22 aufgetragen. Falls die Auftragswalze 22 wie in den Fig. 2 und 4 gezeigt ein Teil des Walzenpaars 20 ist, wird der Materialfilm 14 ausgehend von dem Filmbildungsspalt 24 unmittelbar auf die Auftragswalze 22 aufgetragen. Falls die Auftragswalze 22 dagegen wie in den Fig. 3 und 5 gezeigt separat zu dem Walzenpaar 20 ausgebildet ist, wird der Materialfilm 14 ausgehend von dem Filmbildungsspalt 24 unmittelbar auf die Transferwalze 34 aufgetragen. Über die Transferwalze 34 wird der Materialfilm 14 dann vom Filmbildungsspalt 24 zur Auftragswalze 22 übertragen. Dabei übergibt die Transferwalze 34 den Materialfilm 14 entweder mittelbar (nicht gezeigt) oder wie in den Fig. 3 und 5 gezeigt unmittelbar an die Auftragswalze 22.

Das Substrat 12 ist vorliegend eine Folie aus einem leitenden Material. Das Substrat 12 wird der Auftragswalze 22 zugeführt und der Materialfilm 14 wird von der Auftragswalze 22 aus auf das Substrat 12 übertragen. Optional ist das Substrat 12 mit einem Haftvermittler oder ähnlichem beschichtet, um den Materialfilm 14 sicher zu fixieren. Das Übertragen des Materialfilms 14 auf das Substrat 12 wird auch als "Laminieren" bezeichnet.

Wie in den Fig. 2 bis 5 erkennbar ist, ist der Materialfilm 14 nicht freitragend, sondern ist vom Filmbildungsspalt 24 bis zum Substrat 12 durchgängig von einer oder mehreren Walzen getragen. Daher wird der Materialfilm 14 auch als "walzengetragener Materialfilm" bezeichnet.

Zum Übertragen des Materialfilms 14 auf das Substrat 12 weist die Walzvorrichtung 2 in den gezeigten Ausführungsbeispielen eine Gegenwalze 36 zur Auftragswalze 22 auf. Die Gegenwalze 36 ist entweder eine separate Walze (vgl. Fig. 4 und 5) oder eine Auftragswalze 22 eines zweiten Walzwerks 18, analog zum bereits beschriebenen (dann ersten) Walzwerk 16 (vgl. Fig. 2 und 3). Zwischen der Gegenwalze 36 und der Auftragswalze 22 ist dann ein Spalt 38 ausgebildet, durch welchen hindurch das Substrat 12 gefördert wird und in welchem der Materialfilm 14 auf das Substrat 12 übertragen wird. Vorliegend wird beim Übertragen auf das Substrat 12 der Materialfilm 14 nicht verdichtet oder höchstens lediglich geringfügig verdichtet. In diesem Fall wird der Spalt 38 auch als "Laminierspalt" bezeichnet.

Ganz allgemein weist der Materialfilm 14 ein Flächengewicht G und eine Filmdicke D auf. Die Filmdicke D ist senkrecht zu einer Breite (in den Fig. 2 bis 5 senkrecht zur Bildebene) und einer Länge (in den Fig. 2 bis 5 in der Bildebene und entlang des Materialfilms 14, d.h. entlang einer Förderrichtung des Materialfilms 14) des Materialfilms 14 gemessen und dessen geringste Ausdehnung. Das Flächengewicht G gibt an, welche Masse der Materialfilm pro Flächeneinheit aufweist, wobei sich die Flächeneinheit in Richtung der Länge und der Breite des Materialfilms 14 erstreckt.

Das Flächengewicht G und auch die Filmdicke D sind vor dem Übertragen des Materialfilms 14 auf das Substrat 12 durch eine entsprechende Steuerung der Walzvorrichtung 2 einstellbar. Vorliegend werden nun das Flächengewicht G und/oder die Filmdicke D auf einen Sollwert geregelt und hierzu wird die Walzvorrichtung 2 abhängig von dem Flächengewicht G und/oder der Filmdicke D gesteuert. Darunter wird verstanden, dass entweder das Flächengewicht G oder die Filmdicke D auf einen Sollwert geregelt wird oder dass beides zugleich erfolgt, d.h. dass das Flächengewicht G und die Filmdicke D auf einen jeweiligen Sollwert geregelt werden. Vorliegende ist dann eine automatische Einstellung und Anpassung (nämlich eine Regelung) der Walzvorrichtung 2 realisiert, wodurch sichergestellt wird, dass kontinuierlich oder zumindest weit überwiegend ein vorgegebenes Flächengewicht ("Zielbeladung") und/oder eine vorgegebene Filmdicke ("Zieldicke") erzeugt werden.

Die Elektrodenbahn 4 wird demnach gerade nicht erst nachträglich, d.h. nach dem Übertragen des Materialfilms 14 auf das Substrat 12, bearbeitet, um Flächengewicht G und Filmdicke D einzustellen, sondern der Materialfilm 01 wird vor dem Übertragen auf das Substrat 12 entsprechend passend erzeugt.

Um das Flächengewicht G und/oder die Filmdicke D auf einen jeweiligen Sollwert zu regeln, weist die Walzvorrichtung 2 in den hier gezeigten Ausführungsbeispielen eine Steuereinheit 40 sowie wenigstens eine Messeinheit 42 und wenigstens einen Regler 44 auf, welche mit der Steuereinheit 40 verbunden sind oder ein Teil derselben sind. Mit einer jeweiligen Messeinheit 42 wird eine Regelgröße gemessen und daraus ein Istwert bestimmt, dieser wird dann an einen oder mehrere der Regler 44 weitergeleitet. Dem Regler 44 wird außerdem der Sollwert zugeführt. Abhängig von einer Abweichung des Istwerts zum Sollwert (Regelabweichung) steuert dann der Regler 44 die Walzvorrichtung 2, d.h. eine entsprechende Stellgröße. Nachfolgend werden verschiedene geeignete Ausgestaltungen hierfür beschrieben. Diese Ausgestaltungen unterschieden sich insbesondere in der Wahl der Regelgröße und deren Messung sowie in der Stellgröße, d.h. darin, wie die Walzvorrichtung 2 konkret gesteuert wird. Dabei sind die verschiedenen Ausgestaltungen oder lediglich einzelne Aspekte davon grundsätzlich miteinander kombinierbar.

Als Stellgröße sind besonders die oben bereits genannte Spaltbreite B1 des Filmbildungsspalts 24 und die Relativgeschwindigkeit Δ(U1, U2) der Walzen des Walzenpaars 20 geeignet. Entsprechend wird in einer möglichen Ausgestaltung die Walzvorrichtung 2 gesteuert, indem die Spaltbreite B1 eingestellt wird. Alternativ oder zusätzlich wird die Walzvorrichtung 2 gesteuert, indem eine Differenz der Umfangsgeschwindigkeiten U1, U2 eingestellt wird. Durch beide Maßnahmen wird jeweils direkt die Menge an Material 26 eingestellt, welche (pro Zeiteinheit) aus dem Filmbildungsspalt 24 ausgegeben wird, und somit auch Flächengewicht G und Filmdicke D des Materialfilms 14. Bei entsprechender Steuerung sowohl der Spaltbreite B1 als auch der Relativgeschwindigkeit lassen sich auch Flächengewicht G und Filmdicke D unabhängig voneinander einstellen.

In einer Ausgestaltung werden das Flächengewicht G oder die Filmdicke D oder beide gemessen und direkt als Istwert verwendet. Als Sollwert wird dann eine entsprechende Zielbeladung oder Zieldicke verwendet. Möglich ist aber auch eine Ausgestaltung, bei welcher der Istwert (und analog der Sollwert) aus dem Flächengewicht G oder der Filmdicke D oder aus beiden gemeinsam lediglich abgeleitet ist und gegebenenfalls entsprechend abstrahiert ist. In einer weiteren Ausgestaltung wird das Flächengewicht G aus einer Messung der Filmdicke D abgeleitet. Hierzu wird die Filmdicke D z.B. auf der Auftragswalze 22 gemessen und dann in Kombination mit der Umfangsgeschwindigkeit U2 der Auftragswalze 22 und der Menge an Material 26, welches vom Filmbildungsspalt 24 ausgegeben wird, ein Istwert für das Flächengewicht G errechnet und damit dann eine Regelung des Flächengewichts G basierend auf einer Messung der Filmdicke D durchgeführt.

Eine Messung des Flächengewichts G und der Filmdicke D ist an unterschiedlichen Stellen der Walzvorrichtung 2 möglich, wie in den Fig. 2 bis 5 erkennbar ist. Vorliegend wird Flächengewicht G und/oder die Filmdicke D gemessen, während der Materialfilm 14 auf der Auftragswalze 22 aufgetragen ist, oder alternativ oder zusätzlich, während der Materialfilm 14 auf dem Substrat 12 aufgetragen ist. In den Fig. 2 bis 5 sind hierzu entsprechende Messeinheiten 42 gezeigt, welcher jeweils entweder das Flächengewicht G, die Filmdicke D oder beide messen. Die Messung des Flächengewichts G erfolgt beispielsweise am Materialfilm 14 auf dem Substrat 12 möglich, da dieses stromab der Auftragswalze 22 regelmäßig freistehend ist, wie in den Fig. 2 bis 5 erkennbar ist. Grundsätzlich ist eine Messung des Flächengewichts G aber auch am walzengetragenen Materialfilm 14 vor dem Übertragen auf das Substrat 12 möglich. In einer Ausgestaltung wird die Filmdicke D gemessen, während der Materialfilm 14 auf der Auftragswalze 22 aufgetragen ist, und das Flächengewicht G, während der Materialfilm 14 auf dem Substrat 12 aufgetragen ist. In einer Ausgestaltung, bei welcher beidseitig auf das Substrat 12 je ein Materialfilm 14 aufgetragen wird, liefert die Messung des Flächengewichts G nur einen Wert (Istwert) für beide Materialfilme 14 zusammen. Mit der zusätzlichen Messung der Filmdicke D der einzelnen Materialfilme 14 vor dem Übertragen auf das Substrat 12 wird dann dieser Wert entsprechend dem Verhältnis der beiden Filmdicken D auf die beiden Materialfilme 14 aufgeteilt und somit für jeden der Materialfilme 14 das jeweilige Flächengewicht G zumindest näherungsweise korrekt bestimmt.

Analog zur Spaltbreite B1 des Filmbildungsspalts 24 und der Relativgeschwindigkeit der Walzen des Walzenpaars 20 wird bei einer Walzvorrichtung 2 mit einer Transferwalze 34 auch alternativ oder zusätzlich einerseits die Spaltbreite B2 des Spalts 38 als Stellgröße und/oder andererseits die Relativgeschwindigkeit zwischen Transferwalze 34 und Auftragswalze 22 als Stellgröße verwendet. Wie bereits beschrieben, weist die jeweilige Walzvorrichtung 2 in den Fig. 3 und 5 eine Transferwalze 34 auf, welche stromauf der Auftragswalze 22 angeordnet ist und über welche der Materialfilm 14 vom Filmbildungsspalt 24 zur Auftragswalze 22 übertragen wird. Die Walzvorrichtung 2 wird dann gesteuert, indem eine Spaltbreite B2 des Spalts 38 eingestellt wird und/oder indem die Differenz der Umfangsgeschwindigkeiten U2, U3 (d.h. Relativgeschwindigkeit Δ(U2, U3) der Transferwalze 34 und der Auftragswalze 22 eingestellt wird.

Ebenso wird analog zur Messung des Flächengewichts G und/oder der Filmdicke D auf der Auftragswalze 22 und alternativ oder zusätzlich hierzu in einer geeigneten Ausgestaltung das Flächengewicht G und/oder die Filmdicke D gemessen, während der Materialfilm 14 auf der Transferwalze 34 aufgetragen ist.

Wie in den Fig. 2 bis 5 erkennbar ist, kommen für die Walzvorrichtung 2 unterschiedliche Konfigurationen in Betracht, welche allesamt für das hier beschriebene Verfahren geeignet sind. Die optionale Verwendung einer Transferwalze 34 wurde bereits beschrieben. Weiterhin ist auch eine einseitige oder beidseitige Beschichtung des Substrats möglich, wobei in den Fig. 2 bis 5 lediglich letztere gezeigt ist. Entsprechend wird vorliegend mit der jeweiligen Walzvorrichtung 2 das Substrat 12 beidseitig beschichtet. Der bereits beschriebene (erste) Materialfilm 14 wird dann auf eine erste Seite des Substrats 12 aufgetragen und die Walzvorrichtung 2 weist ein weiteres (zweites) Walzwerk 18 auf, mit welchem ein weiterer (zweiter) Materialfilm 14 erzeugt wird, welcher auf eine gegenüberliegende, zweite Seite des Substrats 12 aufgetragen wird. Auch der zweite Materialfilm 14 weist ein Flächengewicht G und eine Filmdicke D auf. Die Erzeugung der beiden Materialfilme 14 und deren Übertragung auf das Substrat 12 verläuft gleichartig, d.h. die Walzvorrichtung 2 weist für jeden der Materialfilme 14 ein Walzwerk 16, 18 auf. Die beschriebenen Messungen und Regelungen werden entsprechend den obigen und nachfolgenden Ausführungen für beide Walzwerke 16, 18 und Materialfilme 14 gleichermaßen durchgeführt. Die Walzwerke 16, 18sind bezüglich einer Förderrichtung des Substrats 12 entweder versetzt angeordnet (vgl. Fig. 4 und 5), sodass die beiden Materialfilme 14 nacheinander auf das Substrat 12 übertragen werden, oder an derselben Position (vgl. Fig. 2 und 3), sodass die beiden Materialfilme 14 gleichzeitig auf das Substrat 12 übertragen werden. In letzterem Fall sind die beiden Auftragswalzen 22 dann zugleich jeweils auch eine Gegenwalze 36 für die jeweils andere Auftragswalze 22. Im den Fig. 4 und 5 wird zudem das Flächengewicht G und/oder die Filmdicke D stromab der Auftragswalze 22 des ersten Walzwerks 16 und stromauf der Auftragswalze 22 des zweiten Walzwerks 18 gemessen.

Im Falle eines beidseitig beschichteten Substrats 12 werden die beiden Walzwerke 16, 18 vorliegend zusätzlich noch derart gesteuert, dass eine Differenz der beiden Filmdicken D minimiert wird, d.h. die Materialfilme 14 werden automatisch gleich dick ausgebildet.

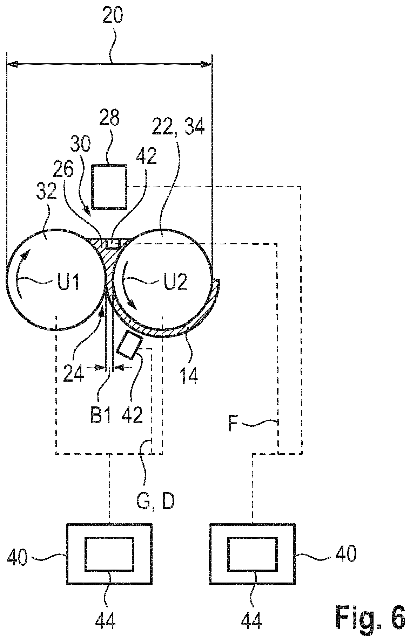

Optional wird in einer Ausgestaltung noch ein Füllstand des Materials 26 vor dem Filmbildungsspalt 24 abhängig von einem Füllstands-Istwert F oder abhängig von dem Flächengewicht G und/oder der Filmdicke D auf einen Füllstands-Sollwert geregelt, d.h. es erfolgt eine Füllstandsregelung. Dies ist beispielhaft in Fig. 6 gezeigt und auf die Ausführungsbeispiele der Fig. 2 bis 5 anwendbar. Damit wird sichergestellt, dass der Zwickel 30 des Walzenpaars 20 weder leerläuft noch überläuft. Die Füllstandsregelung erfolgt entweder dezentral und somit unabhängig von der Regelung des Flächengewichts G und/oder der Filmdicke D, speziell indem einfach der Füllstand-Istwert F gemessen wird und dann abhängig davon die Zufuhr von Material 26 in den Zwickel 30 gesteuert wird. Alternativ erfolgt die Füllstandsregelung zentral, speziell indem die Zufuhr abhängig von dem Flächengewicht G und/oder der Filmdicke D gesteuert wird.

Optional wird zusätzlich auch der Laminierspalt 38 gesteuert wird, z.B. abhängig von dem Flächengewicht G und/oder der Filmdicke D.

Die Steuereinheit 40 übernimmt eine oder mehrere der oben beschriebenen Steuerungs- und Regelungsaufgaben. Entweder sind sämtliche Steuerungs- und Regelungsaufgaben wie in den Fig. 2 bis 5 zentral in einer einzelnen Steuereinheit 40 realisiert oder dezentral auf mehrere entsprechende Steuereinheiten 40 aufgeteilt, z.B. sind eine jeweilige Regelung für die Filmdicke D und das Flächengewicht G unabhängig voneinander mit voneinander getrennten Steuereinheiten 40 realisiert.

### Bezugszeichenliste

- 2: Walzvorrichtung
- 4: Elektrodenbahn
- 6: Batterie
- 8: Antrieb
- 10: Fahrzeug
- 12: Substrat
- 14: Materialfilm
- 16: (erstes) Walzwerk
- 18: (zweites) Walzwerk
- 20: Walzenpaar
- 22: Auftragswalze
- 24: Filmbildungsspalt
- 26: Material
- 28: Dosiereinrichtung
- 30: Zwickel
- 32: Scherwalze
- 34: Transferwalze
- 36: Gegenwalze
- 38: Spalt (Laminierspalt)
- 40: Steuereinheit
- 42: Messeinheit
- 44: Regler
- B1: Spaltbreite (Filmbildungsspalt)
- B2: Spaltbreite (Laminierspalt)
- D: Filmdicke
- F: Füllstands-Istwert
- G: Flächengewicht
- U1, U2, U3: Umfangsgeschwindigkeiten

## Patentansprüche

1. Verfahren zum Betrieb einer Walzvorrichtung (2) für die Herstellung einer Elektrodenbahn (4),
a. wobei die Walzvorrichtung (2) zur Ausbildung eines Materialfilms (14) für die Elektrodenbahn (4) ein Walzwerk (16, 18) aufweist, mit einem Walzenpaar (20) und mit einer Auftragswalze (22), welche separat zu dem Walzenpaar (20) ausgebildet ist oder ein Teil des Walzenpaars (20) ist,
b. wobei der Auftragswalze (22) ein Substrat (12) für die Elektrodenbahn (4) zugeführt wird,
c. wobei das Walzwerk (16, 18) einen Filmbildungsspalt (24) aufweist, welcher von dem Walzenpaar (20) gebildet ist, welcher eine Menge an Material (26) ausgibt und welcher daraus den Materialfilm (14) erzeugt,
d. wobei der Materialfilm (14) auf die Auftragswalze (22) aufgetragen wird und von der Auftragswalze (22) aus auf das Substrat (12) übertragen wird,
e. wobei der Materialfilm (14) ein Flächengewicht (G) und eine Filmdicke (D) aufweist,
f. wobei das Flächengewicht (G) und/oder die Filmdicke (D) auf einen Sollwert geregelt werden und hierzu die Walzvorrichtung (2) abhängig von dem Flächengewicht (G) und/oder der Filmdicke (D) gesteuert wird.

2. Verfahren nach Anspruch 1,
wobei die Walzvorrichtung (2) gesteuert wird, indem eine Spaltbreite (B1) des Filmbildungsspalts (24) eingestellt wird.

3. Verfahren nach Anspruch 1 oder 2,
wobei das Walzenpaar (2) zwei Walzen aufweist, welche zum Erzeugen des Materialfilms (14) mit unterschiedlichen Umfangsgeschwindigkeiten (U1, U2) betrieben werden, wobei die Walzvorrichtung (2) gesteuert wird, indem eine Differenz der Umfangsgeschwindigkeiten (U1, U2) eingestellt wird.

4. Verfahren nach einem der Ansprüche 1 bis 3,
wobei das Flächengewicht (G) und/oder die Filmdicke (D) am Materialfilm (14) gemessen wird, während der Materialfilm (14) auf der Auftragswalze (22) aufgetragen ist.

5. Verfahren nach einem der Ansprüche 1 bis 4,
wobei das Flächengewicht (G) und/oder die Filmdicke am Materialfilm (14) gemessen wird, während der Materialfilm auf dem Substrat aufgetragen ist.

6. Verfahren nach einem der Ansprüche 1 bis 5,
wobei die Walzvorrichtung (2) eine Transferwalze (34) aufweist, welche stromauf der Auftragswalze (22) angeordnet ist und über welche der Materialfilm (14) vom Filmbildungsspalt (24) zur Auftragswalze (22) übertragen wird,
wobei die Walzvorrichtung (2) gesteuert wird,
a. indem eine Spaltbreite (B2) eines Spalts (38) zwischen der Transferwalze (34) und der Auftragswalze (22) eingestellt wird und/oder
b. indem eine Differenz der Umfangsgeschwindigkeiten (U2, U3) der Transferwalze (34) und der Auftragswalze (22) eingestellt wird.

7. Verfahren nach einem der Ansprüche 1 bis 6,
wobei die Walzvorrichtung (2) eine Transferwalze (34) aufweist, welche stromauf der Auftragswalze (22) angeordnet ist und über welche der Materialfilm (14) vom Filmbildungsspalt (24) zur Auftragswalze (22) übertragen wird,
wobei das Flächengewicht (G) und/oder die Filmdicke (D) am Materialfilm (14) gemessen wird, während der Materialfilm (14) auf der Transferwalze (34) aufgetragen ist.

8. Verfahren nach einem der Ansprüche 1 bis 7,
wobei der Materialfilm (14) auf eine erste Seite des Substrats (12) aufgetragen wird,
wobei die Walzvorrichtung (2) ein weiteres Walzwerk (16, 18) aufweist, mit welchem ein weiterer Materialfilm (14) erzeugt wird, welcher auf eine gegenüberliegende, zweite Seite des Substrats (12) aufgetragen wird und eine Filmdicke (D) aufweist,
wobei die beiden Walzwerke (16, 18) derart gesteuert werden, dass eine Differenz der beiden Filmdicken (D) minimiert wird.

9. Verfahren nach einem der Ansprüche 1 bis 8,
wobei das Material (26) frei von flüssigen Inhaltsstoffen ist oder höchstens 3 Gew.% an flüssigen Inhaltsstoffen enthält.

10. Walzvorrichtung (2), welche eine Steuereinheit (40) aufweist,
wobei die Steuereinheit (40) ausgebildet ist zur Durchführung eines Verfahrens gemäß einem der Ansprüche 1 bis 9.
